# EUROPÄISCHE PATENTSCHRIFT

(11) **EP 2 659 150 B1**
(45) Veröffentlichungstag und Bekanntmachung des Hinweises auf die Patenterteilung: **18.05.2016**
(21) Anmeldenummer: 11817305.3
(22) Anmeldetag: 22.12.2011
(51) Int. Cl.: F16B 5/02

(54) **BEFESTIGUNGSSYSTEM**
FASTENING SYSTEM
SYSTÈME DE FIXATION

(30) Priorität: 29.12.2010 DE 102010056547
(43) Veröffentlichungstag der Anmeldung: 06.11.2013
(73) Patentinhaber: Merten GmbH, 51674 Wiehl (DE)
(72) Erfinder: ANSORGE, Rainer, 51709 Marienheide (DE)
(86) Internationale Anmeldenummer: PCT/DE2011/002180
(87) Internationale Veröffentlichungsnummer: WO 2012/095086

(56) Entgegenhaltungen:
- EP-A2- 0 325 736
- DE-A1- 2 619 183
- FR-A- 1 472 528
- NL-A- 6 805 352
- US-A- 4 469 466

## Beschreibung

Die Erfindung betrifft ein Befestigungssystem nach dem Oberbegriff des Patentanspruches 1.

Wandbefestigungen für Gegenstände sind in unterschiedlichster Art und Weise bekannt, wobei insbesondere für großflächige und schwere Gegenstände oft eine Befestigung an mindestens zwei Punkten notwendig ist. Praktischerweise sind an den Befestigungen häufig Ausgleichseinrichtungen vorhanden, so dass Fertigungstoleranzen oder Abweichungen bei der Anordnung von Befestigungspunkten ausgeglichen werden können.

Vorteilhaft sind Systeme, die in der Ebene zwischen den Befestigungspunkten einen Ausgleich in allen Richtungen ermöglichen. Derartige Systeme sind bekannt, weisen jedoch verschiedene Unzulänglichkeiten auf. Häufig werden exzentrisch verstellbare Scheiben benutzt, deren Anordnung innerhalb des Befestigungssystems jedoch häufig unpraktisch oder auch begrenzt in ihrem Verstellbereich ist. Wesentlicher Nachteil bei den Systemen ist jedoch, dass das erstmalige Anbringen des Gegenstandes erst durch Einschrauben einer Schraube durch das Befestigungssystem erfolgt. Neben dem Halten des zu befestigenden Gegenstandes einschließlich des Aufbringen des Gewichtes ist zusätzlich die Verschraubung zu realisieren. Derartige Anordnungen und Verfahren bedeuten einen erhöhten Montageaufwand und sind nicht besonders praktikabel.

Aus der NL 6 805 352 A ist ein Befestigungssystem bekannt, wobei die Halterung einer Scheibe einerseits durch eine radiale Tiefziehung der Scheibe erfolgt, die formschlüssig in eine Montageöffnung eingesetzt wird, und andererseits durch zwei der Montageöffnung vorgesetzte, gegenüberliegend angeordnete und an der Montageplatte angeschweißte Haltezungen, die die Scheibe einfassen. Die Scheibe muss seitlich unter die Haltezungen in die Montageöffnung eingeschoben werden.

Die Aufgabe der vorliegenden Erfindung besteht deshalb darin, die vorstehend genannten Nachteile zu beseitigen und ein Befestigungssystem zu schaffen, das eine sichere und montagefreundliche Befestigung und Ausrichtung von Gegenständen ermöglicht.

Gelöst wird diese Aufgabe durch die im Patentanspruch 1 angegebenen Merkmale. Vorteilhafte Ausgestaltungen ergeben sich aus den Unteransprüchen.

Die Erfindung gemäß dem Patentanspruch 1 weist den Vorteil auf, dass zuerst Befestigungspunkte geschaffen werden, an die der Gegenstand aufgehängt werden kann und erst anschließend eine Ausrichtung erfolgen kann. Hierdurch wird vermieden, dass neben dem positionsgenauen Halten des Gegenstandes gleichzeitig die Montage von Befestigungsmitteln, z. B. Schrauben oder Nägel, notwendig ist.

Die Ausrichtung erfolgt in der Ebene der Befestigungspunkte in allen Richtungen. Durch die Anordnung einer frei drehbaren Scheibe in einer Aufnahme des Gegenstandes, wobei ein wandseitiger Befestigungsstift in einem Langloch in der Scheibe angeordnet ist, kann eine weitgehend freie Ausrichtung des Gegenstandes erfolgen. Vorteilhaft macht sich diese Befestigungsvorrichtung bei mehreren Befestigungspunkten an einem Gegenstand bemerkbar, da selbst beim Zusammenwirken aller Befestigungspunkte eine sehr variable Ausrichtung ermöglicht wird.

Der Befestigungsstift ist als Stockschraube ausgebildet die an ihrem einen Ende wandseitig befestigt ist, z. B. mittels eines Dübels, und an deren anderem Ende mittels einer Schraubenmutter die Scheibe in der Aufnahme in der eingestellten Ausrichtung klemmend fixiert wird. Vorzugsweise weist die Schraubenmutter außenseitig Griffhilfen auf, um eine gute Kraftübertragung zu gewährleisten.

Die Aufnahme für die Scheibe wird rückseitig durch einen Umfangsrand einer Montageöffnung an dem zu befestigenden Gegenstand gebildet und vorderseitig durch von dem Umfangsrand sich erstreckenden Federarmen. Durch Druck gegen die nachgebenden Federarme kann die Scheibe in die Aufnahme zwischen Umfangsrand und Federarme eingeclipst werden. Innerhalb der Aufnahme ist die Scheibe frei drehbar angeordnet.

Eine mögliche Anwendungsform des Befestigungssystems ist eine Anzeigevorrichtung, z. B. ein sogenanntes Panel, das an einer Wand befestigt wird

Weitere Einzelheiten, Merkmale und Vorteile der Erfindung ergeben sich aus nachfolgender Beschreibung eines bevorzugten Ausführungsbeispieles anhand der Zeichnungen.

Es zeigen:

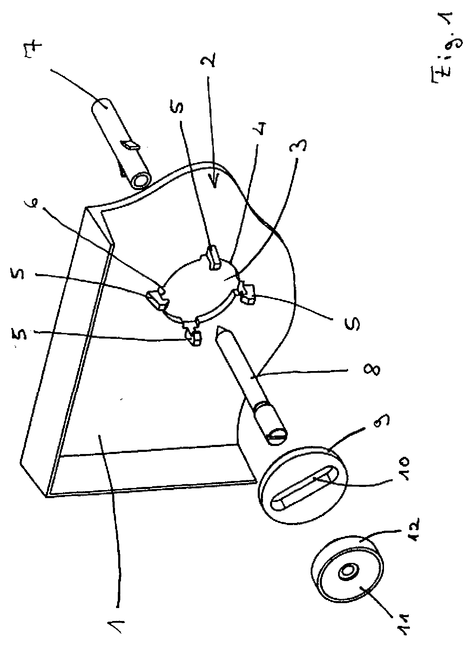

- Figur 1: eine Explosionsansicht der Bauelemente des Befestigungssystems an einem Befestigungspunkt,

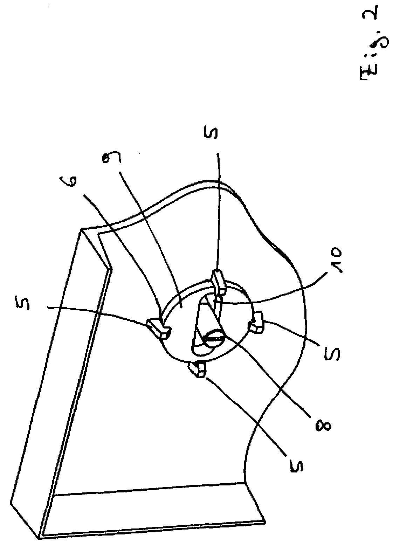

- Figur 2: einen montierten Befestigungspunkt in einer exemplarischen Ausrichtung der Scheibe ohne Schraubenmutter,

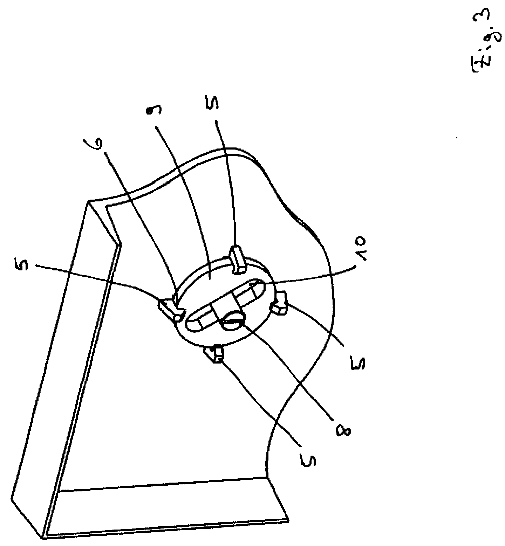

- Figur 3: einen montierten Befestigungspunkt in einer weiteren exemplarischen Ausrichtung der Scheibe ohne Schraubenmutter,

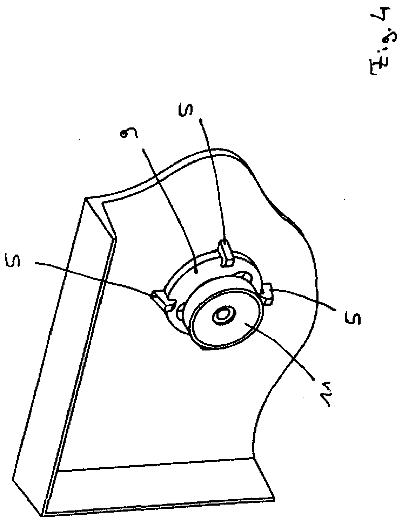

- Figur 4: einen montierten Befestigungspunkt mit Schraubenmutter, und
- Figur 5: eine Anordnung von Befestigungspunkten an einem Panel.

Gleiche oder gleichwirkende Bauteile sind in der nachfolgenden Beschreibung mit gleichen Bezugszeichen versehen

Der Aufbau des erfindungsgemäßen Befestigungssystems wird anhand der Figuren näher beschrieben.

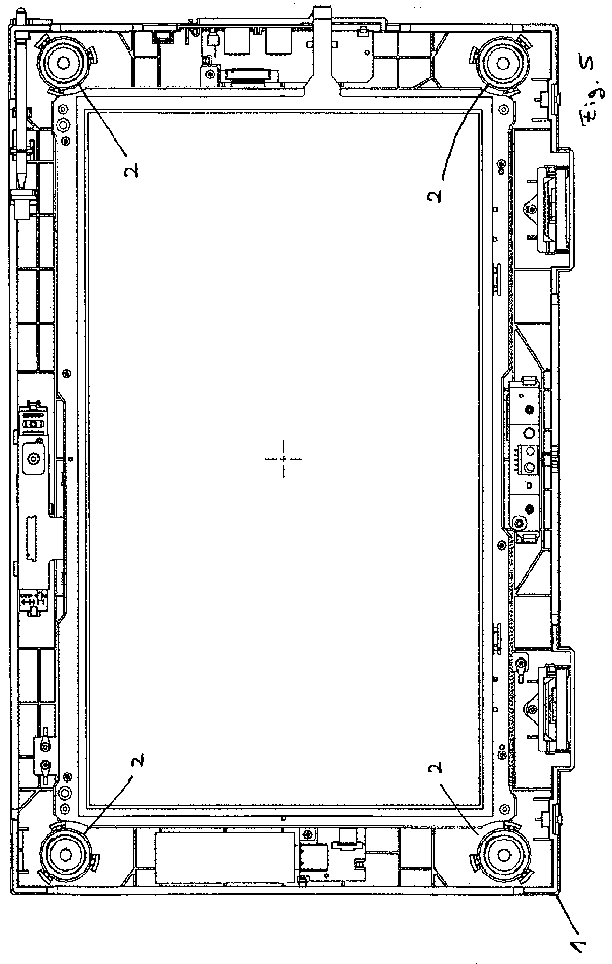

Das Befestigungssystem kann beispielsweise an einem flächenmäßig sich erstreckenden Gegenstand 1 wie ein Panel realisiert werden, da hier in der Regel 4 Befestigungspunkte 2 vorgesehen werden und eine Montage und Ausrichtung möglichst praktikabel und einfach sein sollen (Figur 5).

Jeder Befestigungspunkt 2 weist eine seitens des zu befestigenden Gegenstandes 1 ausgebildete runde Montageöffnung 3 auf. Durch einen Umfangsrand 4 der Montageöffnung 3 und von diesem Umfangsrand 4 vorstehend ausgebildeten Federarmen 5 wird eine Aufnahme 6 gebildet. Die Federarme 5 sind gleichmäßig um die Montageöffnung 3 verteilt. Notwendigerweise sind zumindest drei Federarme 5 ausgebildet.

In einen wandseitig angeordneten Dübel 7 ist eine Stockschraube 8 eindrehbar, so dass vor der Montage des Gegenstandes 1 ein Aufhängepunkt geschaffen wird.

Eine runde Scheibe 9 wird durch Druck gegen die nachgebenden Federarme 5 in die Aufnahme 6 zwischen Umfangsrand 4 und Federarme 5 eingeclipst werden. Innerhalb der Aufnahme 6 ist die Scheibe 9 frei drehbar angeordnet. Die Scheibe 9 weist ein zentrisch angeordnetes Langloch 10 auf. Der Durchmesser D der Montageöffnung 3 entspricht dabei zumindest der Länge L des Langloches 10.

Der Gegenstand 1 kann durch Eingriff der Stockschraube 8 in das Langloch 10 der Scheibe 9 zunächst provisorisch aufgehängt werden. Die exakte Ausrichtung im Zusammenwirken mit weiteren Befestigungspunkten 1 des Gegenstandes kann durch Drehen der Scheibe 9 innerhalb der Aufnahme 6 erfolgen. Das Drehen kann vorzugsweise durch ein Werkzeug, z. B. Schraubendreher, erfolgen.

Die abschließende Fixierung der Scheibe 9 in der ausgerichteten Position erfolgt durch Aufdrehen einer Schraubenmutter 11 auf die Stockschraube 8. Dabei klemmt die Schraubenmutter 11 die Scheibe 9 gegen den zu befestigenden Gegenstand 1 und letztendlich gegen den Befestigungsuntergrund, z. B. eine Wand. Zur besseren Kraftübertragung weist die Schraubenmutter 11 außenseitig Griffhilfen 12, z. B. in Form einer Rändelung, auf.

### Bezugszeichenliste

- 1: Gegenstand
- 2: Befestigungspunkt
- 3: Montageöffnung
- 4: Umfangsrand
- 5: Federarm
- 6: Aufnahme
- 7: Dübel
- 8: Stockschraube
- 9: Scheibe
- 10: Langloch
- 11: Schraubenmutter
- 12: Griffhilfe

- D: Durchmesser der Montageöffnung
- L: Länge des Langloches

## Patentansprüche

1. Befestigungssystem bestehend einerseits aus einer runden Scheibe (9), in der ein Langloch (10) ausgebildet ist, aus einer Stockschraube (8) und aus einer Schraubenmutter (11) und andererseits aus einer Montageöffnung (3) in einem zu befestigenden Gegenstand (1) und aus einer die Scheibe (9) aufnehmenden Aufnahme (6), die zentrisch vor der Montageöffnung (3) angeordnet ist, wobei die Montageöffnung (3) und das Langloch (10) in der Scheibe (9) mit der wandseitig befestigbaren Stockschraube (8) in Eingriff bringbar sind, die Scheibe (9) mit dem Langloch (10) unter Eingriff der Stockschraube (8) drehbar in der Aufnahme (6) anordenbar ist und die Schraubenmutter (11) unter Klemmung der Scheibe (9) auf die Stockschraube (8) aufdrehbar ist, ***dadurch gekennzeichnet, dass** die Ausnahme (6) für die Scheibe (9) rückseitig durch einen Umfangswand (4) der Montageöffnung (3) gebildet ist und vorderseitig durch mindestens drei von dem Umfangsrand (4) sich erstreckenden, nachgebenden Federarmen (5) gebildet ist.*

2. Befestigungssystem nach Patentanspruch 1, **dadurch gekennzeichnet, dass** das Langloch (10) zentrisch in der Scheibe (9) ausgebildet ist.

3. Befestigungssystem nach Patentanspruch 1 oder 2, **dadurch gekennzeichnet, dass** der Durchmesser (D) der Montageöffnung (3) zumindest der Länge (L) des Langloches (10) entspricht.

4. Befestigungssystem nach einem der vorhergehenden Patentansprüche, **dadurch gekennzeichnet, dass** die Schraubenmutter (11) außenseitig Griffhilfen (12) aufweist.

5. Befestigungssystem nach einem der vorhergehenden Patentansprüche, **dadurch gekennzeichnet, dass** das Befestigungssystem zur Befestigung eines Gegenstandes (1) mit mindestens 3 Befestigungspunkten (2) genutzt wird.

6. Befestigungssystem nach einem der vorhergehenden Patentansprüche, **dadurch gekennzeichnet, dass** das Befestigungssystem zur Befestigung eines Panels genutzt wird.

## Claims

1. Fastening system made up, on the one hand, of a round disc (9), in which a slot (10) is formed, of a hanger bolt (8) and of a nut (11) and, on the other hand, of an installation opening (3) in an article (1) which is to be fastened and of a mount (6), which accommodates the disc (9) and is arranged centrally in front of the installation opening (3), wherein the installation opening (3) and the slot (10) in the disc (9) can be brought into engagement with the hanger bolt (8), which can be fastened in a wall, the disc (9) with the slot (10) can be arranged in a rotatable manner in the mount (6), with the hanger bolt (8) being engaged in the process, and the nut (11) can be screwed onto the hanger bolt (8), with the disc (9) being clamped in the process, **characterized in that** the mount (6) for the disc (9) is formed, on the rear side, by a circumferential periphery (4) of the installation opening (3) and, on the front side, by at least three compliant spring arms (5) extending from the circumferential periphery (4).

2. Fastening system according to Patent Claim 1, **characterized in that** the slot (10) is formed in the centre of disc (9).

3. Fastening system according to Patent Claim 1 or 2, **characterized in that** the diameter (D) of the installation opening (3) corresponds at least to the length (L) of the slot (10).

4. Fastening system according to one of the preceding patent claims, **characterized in that** the nut (11) has gripping aids (12) on the outside.

5. Fastening system according to one of the preceding patent claims, **characterized in that** the fastening system is used for fastening an article (1) with at least 3 fastening points (2).

6. Fastening system according to one of the preceding patent claims, **characterized in that** the fastening system is used for fastening a panel.

## Revendications

1. Système de fixation constitué d'une part d'une rondelle (9) dans laquelle est réalisé un trou oblong (10), d'une vis à double filetage (8) et d'un écrou de vis (11) et d'autre part d'une ouverture de montage (3) dans un objet (1) à fixer et d'un logement (6) recevant la rondelle (9), lequel est disposé centralement avant l'ouverture de montage (3), l'ouverture de montage (3) et le trou oblong (10) dans la rondelle (9) pouvant être amenés en prise avec la vis à double filetage (8) pouvant être fixée du côté de la paroi, la rondelle (9) avec le trou oblong (10) pouvant être disposée en venant en prise avec la vis à double filetage (8) de manière à pouvoir tourner dans le logement (6) et l'écrou de vis (11) pouvant être vissé sur la vis à double filetage (8) en serrant la rondelle (9), **caractérisé en ce que** le logement (6) pour la rondelle (9) est formé du côté arrière par un bord périphérique (4) de l'ouverture de montage (3) et du côté avant par au moins trois bras de ressort (5) flexibles, s'étendant depuis le bord périphérique (4).

2. Système de fixation selon la revendication 1, **caractérisé en ce que** le trou oblong (10) est réalisé centralement dans la rondelle (9).

3. Système de fixation selon la revendication 1 ou 2, **caractérisé en ce que** le diamètre (D) de l'ouverture de montage (3) correspond au moins à la longueur (L) du trou oblong (10).

4. Système de fixation selon l'une quelconque des revendications précédentes, **caractérisé en ce que** l'écrou de vis (11) présente du côté extérieur des auxiliaires de préhension (12).

5. Système de fixation selon l'une quelconque des revendications précédentes, **caractérisé en ce que** le système de fixation est utilisé pour la fixation d'un objet (1) avec au moins trois points de fixation (2).

6. Système de fixation selon l'une quelconque des revendications précédentes, **caractérisé en ce que** le système de fixation est utilisé pour la fixation d'un panneau.
